# EUROPÄISCHE PATENTANMELDUNG

(11) **EP 1 070 950 A2**
(43) Veröffentlichungstag der Anmeldung: **24.01.2001**
(21) Anmeldenummer: 00115792.4
(22) Anmeldetag: 21.07.2000
(51) Int. Cl.: G01M 11/00

(54) **Schaltungsanordnung und Verfahren zum Erkennen von einer Unterbrechung bei einer Lichtwellenleiterstrecke**

(30) Priorität: 22.07.1999 DE 19934498
(71) Anmelder: SIEMENS AKTIENGESELLSCHAFT, 80333 München (DE)
(72) Erfinder: Cremer, Cornelius, 85586 Poing (DE)

(57) **Zusammenfassung**

Bei dieser Schaltungsanordnung und dem dazugehörigen Verfahren wird zum Erkennen einer Unterbrechung entlang einer Lichtwellenleiterstrecke mit einer Verstärkerfaser die von der Verstärkerfaser ausgesendete Amplified Spontaneous Emission überwacht. Beim Ausbleiben der Amplified Spontaneous Emission wird die die Lichtsignale in die Lichtwellenleiterstrecke einspeisende Sendeeinheit abgeschaltet.

## Beschreibung

Bei Glasfaserübertragungssysteme mit großen Abständen zwischen einem Pumplaser und einer das Licht des Pumplasers verstärkenden Faser, muß der Pumplaser eine sehr hohe Lichtleistung abstrahlen, damit die verstärkende Faser noch genügend Licht zur Verstärkung erhält. Im Fall einer Unterbrechung, hervorgerufen z.B. durch einen Bruch oder ein Auftrennen einer Lichtwellenleiterstrecke, kann Laserlicht mit einer hohen Lichtleistung aus einer Faser austreten und beim Menschen zu gesundheitlichen Schäden führen.

Zur Vermeidung von gesundheitlichen Schäden wurde bisher zusätzlich eine Lichtwellenleiterstrecke oder ein separater Überwachungskanal entlang einer Lichtwellenleiterstrecke eingerichtet, der oder die einen geschlossenen Zustand der Übertragungsstrecke überwacht. Diese Überwachungseinrichtungen bringen jedoch den Nachteil mit sich, daß bei sehr langen Streckenlängen einer Lichtwellenleiterverbindung der schaltungstechnische Aufwand zur Regeneration und Auswertung der Lichtsignale sehr groß ist.

Der Erfindung liegt die Aufgabe zugrunde, eine Schaltunsanordnung und ein dazugehöriges Verfahren zur Überwachung einer Lichtwellenleiterverbindung anzugeben.

Die Lösung der Aufgabe ergibt sich aus den Merkmalen des Patentanspruchs 1 oder 5.

Die Erfindung bringt den Vorteil mit sich, daß kein separater Überwachungskanal entlang einer Lichtwellenleiterstrecke eingerichtet werden muß.

Die Erfindung bringt den Vorteil mit sich, daß beliebig lange Lichtwellenleiterstrecken mit einem minimalen schaltungstechnischen Aufwand überwacht werden können.

Die Erfindung bringt den Vorteil mit sich, daß nur der erste Übertragungsabschnitt einer Lichtwellenleiterstrecke überwacht zu werden braucht.

Die Erfindung bringt den weiteren Vorteil mit sich, daß eine schnelle Abschaltung des optischen Senders erfolgt.

Die Erfindung bringt den Vorteil mit sich, daß die Überwachungseinheit nicht von Einrichtungen wie z.B. Empfänger-, Rücksende- oder Regeleinheiten abhängig ist.

Die Erfindung bringt den Vorteil mit sich, daß bei Ausfall eines Lichtwellenleiters nur der Pumplaser der in diesen Lichtwellenleiter Licht einspeist abgeschaltet zu werden braucht. Eine Sendeeinheit einer intakten optischen Lichtwellenleiterverbindung beispielsweise in umgekehrter Übertragungsrichtung, bleibt im Betrieb.

Weitere Besonderheiten sind in den Unteransprüchen angegeben.

Die Anordnung zur Überwachung einer Lichtwellenleiterverbindung und das dazugehörige Verfahren ist aus einer nachfolgenden näheren Erläuterung zu einem Ausführungsbeispiel ersichtlich.

In der gezeigten Abbildung sind wegen der Übersichtlichkeit nur die wesentlichen Elemente einer optischen Sendeeinheit S, einer Sensoreinheit D sowie eine Koppelanordnung WDM gezeigt.

In der optischen Sendeeinheit S ist ein Pumplaser LD angeordnet. Nach dieser Sendeeinheit S ist ein Koppler WDM vorgesehen mit dessen Ausgang eine Faser F mit einer verstärkenden Faser VF verbunden ist. Das Pumplicht des Pumplasers LD weist eine erste Wellenlänge λ1 von beispielsweise 1480nm auf.

Das Pumplicht des Pumplasers LD wird über den Koppler WDM in eine zu überwachende Faserstrecke F eingekoppelt. In einiger Entfernung, beispielsweise 100km, vom Koppler WDM wird eine zur Verstärkung des Pumplichtes verstärkende Faser VF eingesetzt. Durch die Absorption des empfangenen Pumplichtes wird die verstärkende Faser VF zu einer spontanen Emission die nachfolgend als Amplified Spontaneous Emission ASE bezeichnet wird angeregt. Die Amplified Spontaneous Emission ASE strahlt unteranderm in die Faser in Richtung Sendeeinheit und über den WDM Koppler an eine Photodiode PD der Sensoreinheit D weitergeleitet. Die Nebensprechdämpfung des WDM Kopplers wird dabei so groß gewählt, daß das zurückgestreute oder reflektierte Pumplicht der ersten Wellenlänge λ1 nicht an die Photodiode gelangt. Sollte die Nebensprechdämpfung des WDM Kopplers nicht ausreichen, so kann zwischen dem WDM Koppler und der Detektoreinheit D ein weiteres Dämpfungsglied angeordnet werden.

Die Anordnung zum Erkennen einer Unterbrechung zwischen dem Pumplaser LD und einer im Verlauf einer Faser einer Lichtwellenleiterverbindung integrierten verstärkenden Faser VF beruht auf der Erkennung einer Amplified Spontaneous Emission ASE die von der verstärkenden Faser VF ausgeht. Das Pumplicht des Pumplasers LD mit der ersten Wellenlänge λ1 verursacht in der lichtverstärkenden Faser VF die Amplified Spontaneous Emission ASE mit einer zweiten Wellenlänge λ2. Diese zweite Wellenlänge λ2 kann bei einer Erbiumfaser beispielsweise zwischen 1530-1560nm liegen.
Wird durch die Photodiode PD das Wellenlängenspektrum der zweiten Wellenlänge λ2 detektiert, so ist sichergestellt, daß die optische Verbindung F zwischen dem Pumplaser LD und der verstärkenden Faser VF keine Unterbrechung aufweist. Sollte ein Faserbruch entlang der Lichtwellenleiterverbindung zwischen Pumplaser LD und der verstärkenden Faser VF auftreten, so kann die als Detektor arbeitende Photodiode PD das Licht mit der Wellenlänge λ2 nicht mehr empfangen. Das Pumplicht des gesundheitsgefährdenden Pumplasers PD wird dann sofort durch eine hier nicht explizit dargestellte Abschalteeinrichtung abgeschaltet.

Nach der verstärkenden Faser VF kann kein die Gesundheit gefährdendes Pumplicht aus dem Lichtwellenleiter austreten, da das Pumplicht des Pumplasers LD von der verstärkenden Faser VF absorbiert wurde.

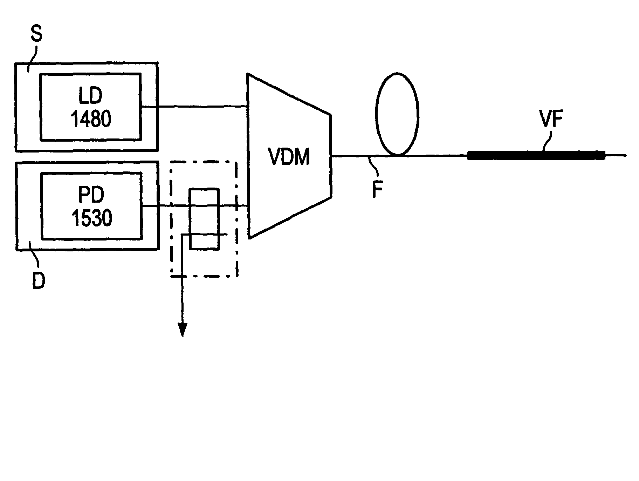

## Patentansprüche

1. Schaltungsanordnung zum Erkennen einer Unterbrechung bei einer Lichtwellenleiterstrecke (F) zwischen einer Sendeeinheit (S) die zu Beginn der Lichtwellenleiterstrecke (F) angeordnet ist und mindestens einer Verstärkerfaser (VF),
**dadurch gekennzeichnet,**
daß eine Sensoreinheit (D) im Bereich der Sendeeinheit (S) zur Detektion der von der Verstärkerfaser (VF) abgegebenen Amplified Spontaneous Emission (ASE) vorgesehen ist.

2. Anordnung nach Anspruch 1,
**dadurch gekennzeichnet,**
daß die Verstärkerfaser (VF) eine Erbiumfaser ist.

3. Anordnung nach Anspruch 1,
**dadurch gekennzeichnet,**
daß die Sensoreinheit (D) eine Photodiode (PD) aufweist.

4. Anordnung nach Anspruch 1,
**dadurch gekennzeichnet,**
daß mindestens ein Koppler (WDM) zur Trennung der rückgestreuten Amplified Spontaneous Emission (ASE) und des von der Sendeeinheit (S) ausgesendeten Lichtes zwischen Sensoreinheit (D) und Lichtwellenleiterstrecke (F) angeordnet ist.

5. Verfahren zum Erkennen einer Unterbrechung einer Lichtwellenleiterstrecke zwischen einer Sendeeinheit (S) die zu Beginn der Lichtwellenleiterstrecke angeordnet ist und mindestens einer Verstärkerfaser (F)
**dadurch gekennzeichnet,**
daß eine von der Verstärkerfaser (VF) erzeugte Amplified Spontaneous Emission (ASE) detektiert wird.

6. Verfahren nach Anspruch 5,
**dadurch gekennzeichnet,**
daß bei ausbleiben der Amplified Spontaneous Emission (ASE) die Sendeeinheit (S) abgeschaltet wird.
